# EUROPEAN PATENT SPECIFICATION

(11) **EP 4 220 796 B1**
(45) Date of publication and mention of the grant of the patent: **23.07.2025**
(21) Application number: 23156804.9
(22) Date of filing: 29.08.2018
(51) Int. Cl.: H01M 10/04, B29C 53/06, B29D 99/00, H01M 50/105, H01M 50/184, H01M 50/186

(54) **SECONDARY BATTERY AND METHOD FOR MANUFACTURING THE SAME, AND PRESSING BLOCK FOR MANUFACTURING SECONDARY BATTERY**
SEKUNDÄRBATTERIE UND VERFAHREN ZUR HERSTELLUNG DAVON SOWIE PRESSBLOCK ZUR HERSTELLUNG EINER SEKUNDÄRBATTERIE
BATTERIE SECONDAIRE ET SON PROCÉDÉ DE FABRICATION, ET BLOC DE PRESSION POUR LA FABRICATION DE BATTERIE SECONDAIRE

(30) Priority: 29.08.2017 KR 20170109442; 27.08.2018 KR 20180100284
(43) Date of publication of application: 02.08.2023
(62) Divisional of application: 18851067.1
(73) Proprietor: LG Energy Solution, Ltd., Seoul 07335 (KR)
(72) Inventor: PARK, Sung Chul, 34122 DAEJEON (KR); KIM, Sang Wook, 34122 DAEJEON (KR); LEE, Dae-Won, 34122 DAEJEON (KR); PARK, Dong Hyeuk, 34122 DAEJEON (KR)
(74) Representative: Plasseraud IP

(56) References cited:
- EP-A1- 3 147 963
- JP-A- 2016 009 677
- KR-A- 20120 008 297
- US-A1- 2011 091 766

## Description

### CROSS-REFERENCE TO RELATED APPLICATION

The present application claims the benefit of the priority of Korean Patent Application Nos. 10-2017-0109442, filed on August 29, 2017, and 10-2018-0100284, filed on August 27, 2018.

### TECHNICAL FIELD

The present invention relates to a method for manufacturing a secondary battery. Also, the disclosure relates to a secondary battery and a pressing block for manufacturing the secondary battery.

### BACKGROUND ART

Rechargeable batteries are rechargeable unlike primarily batteries, and also, the possibility of compact size and high capacity is high. Thus, recently, many studies on rechargeable batteries are being carried out. As technology development and demands for mobile devices increase, the demands for rechargeable batteries as energy sources are rapidly increasing.

Rechargeable batteries are classified into coin type batteries, cylindrical type batteries, prismatic type batteries, and pouch type batteries according to a shape of a battery case. In such a secondary battery, an electrode assembly mounted in a battery case is a chargeable and dischargeable power generating device having a structure in which an electrode and a separator are stacked.

The electrode assembly may be approximately classified into a jelly-roll type electrode assembly in which a separator is interposed between a positive electrode and a negative electrode, each of which is provided as the form of a sheet coated with an active material, and then, the positive electrode, the separator, and the negative electrode are wound, a stacked type electrode assembly in which a plurality of positive and negative electrodes with a separator therebetween are sequentially stacked, and a stack/folding type electrode assembly in which stacked type unit cells are wound together with a separation film having a long length.

Recently, the pouch-type battery in which a stack/ folding type electrode assembly is built in a pouch-type battery case provided as an aluminum lamination sheet is attracting much attention due to its low manufacturing cost, small weight, easy shape deformation, and the like, and thus, its usage is gradually increasing.

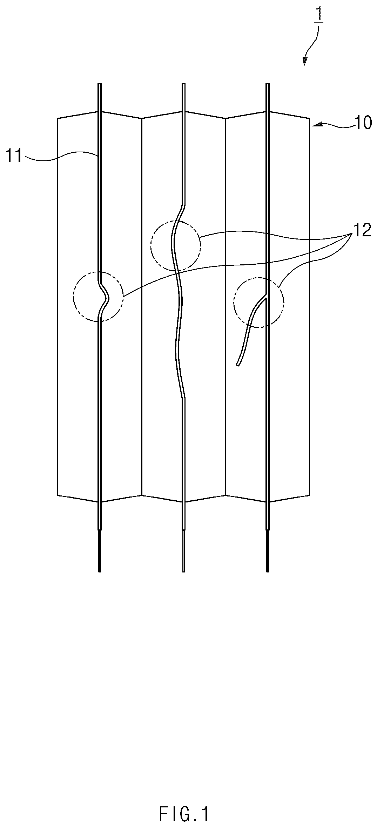

FIG. 1 is a perspective view of a secondary battery according to a related art.

Referring to FIG. 1, there has been a problem in that a wrinkle 12 is generated on an outer shell 11 of a battery case 10 and in the vicinity of the outer shell 11 while a secondary battery according to the related art is manufactured.

In more detail, there has been a problem in that a wrinkle 12 having a bat-ear shape is generated on the outer shell 11 of the battery case 10 and in the vicinity of the outer shell 11 while vacuum is applied to discharge an internal gas of the battery case 10 to the outside.

Also, there has been a problem in that interference occurs between the stacked secondary battery 1 when a plurality of secondary batteries 1 are stacked to be modularized because the wrinkle 12 is generated on the battery case 10.
Additionally, EP 3 147 963 relates to battery case having anti-wrinkle pattern. KR 2012 008297 relates to a pouch type secondary battery aimed at preventing the loss of electrolyte or the permeation of moisture. US 2011/091766 relates to a method of manufacturing a secondary battery including sealing a side portion of the first case and a side portion of the second case using a jig.

### DISCLOSURE OF THE INVENTION

### TECHNICAL PROBLEM

One aspect of the present invention is to provide a secondary battery, which is capable of preventing a wrinkle from being generated on an outer shell of a battery case in the secondary battery, and a method for manufacturing the same, and a pressing block for manufacturing the secondary battery.

### TECHNICAL SOLUTION

In a secondary battery and a method for manufacturing the secondary battery according to an embodiment of the present invention, the method for manufacturing the secondary battery as defined in claim 1 comprises: a forming step of forming a pouch sheet to form an accommodation part in which an electrode assembly is accommodated, a folding step of folding the pouch sheet with respect to a folding part so that the electrode assembly is accommodated in the accommodation part, and the accommodation part is blocked from the outside to form a battery case, and an anti-wrinkle step of forming an anti-wrinkle bending part on an outer shell to prevent wrinkles from being generated on the outer shell of the folded pouch sheet.

Also, a secondary battery is disclosed. It comprises: an electrode assembly in which electrodes and separators are alternately combined and stacked on each other and a battery case formed by folding a pouch sheet to accommodate an electrode assembly, wherein an anti-wrinkle bending part is formed on an outer shell to prevent wrinkles from being generated on the outer shell of the battery case.

Furthermore, a pressing block for a secondary battery is disclosed. It comprises a plurality of pressing blocks moving in a direction facing each other to press and compress an outer shell of a pouch sheet in which an electrode assembly is accommodated and a bending formation part formed on each of pressing surfaces of the plurality of pressing blocks so that an anti-wrinkle bending part is formed on the outer shell when the outer shell of the pouch sheet is pressed by the plurality of pressing blocks.

### ADVANTAGEOUS EFFECTS

According to the present invention, the anti-wrinkle bending part may be formed on the outer shell of the battery case in the secondary battery to prevent the wrinkle from being generated on the outer shell. Particularly, when the vacuum is applied to discharge the internal gas of the battery case to the outside, the wrinkle having the bat-ear shape may be prevented from being generated on the outer shell of the battery case and in the vicinity of the outer shell. Here, the anti-wrinkle bending part may be disposed on the opposite side of the gas pocket part, through which the internal gas is discharged, in the outer shell of the battery case to support the opposite side of the gas pocket part when the vacuum is applied, thereby effectively preventing the wrinkle from being generated on the opposite side of the gas pocket part and the vicinity of the opposite side.

### BRIEF DESCRIPTION OF THE DRAWINGS

FIG. 1 is a perspective view of a secondary battery according to a related art.
FIG. 2 is a flowchart illustrating a method for manufacturing a secondary battery according to an embodiment of the present invention.
FIG. 3 is a plan view illustrating a forming step in the method for manufacturing the secondary battery according to a first embodiment of the present invention.
FIG. 4 is a cross-sectional view taken along line A-A' of FIG. 3.
FIG. 5 is a plan view illustrating a folding step in the method for manufacturing the secondary battery according to the first embodiment of the present invention.
FIG. 6 is a plan view illustrating a sealing step and an anti-wrinkle step in the method for manufacturing the secondary battery according to the first embodiment of the present invention.
FIG. 7 is a side view illustrating the anti-wrinkle step in the method for manufacturing the secondary battery according to the first embodiment of the present invention.
FIG. 8 is a plan view illustrating the sealing step in the method for manufacturing the secondary battery according to the first embodiment of the present invention.
FIG. 9 is a side view illustrating an anti-wrinkle step in a method for manufacturing a secondary battery according to a second embodiment of the present invention.
FIG. 10 is a side view illustrating an anti-wrinkle step in a method for manufacturing a secondary battery according to a third embodiment of the present invention.
FIG. 11 is a side view illustrating an anti-wrinkle step in a method for manufacturing a secondary battery according to a fourth embodiment of the present invention.
FIG. 12 is a side view illustrating a state before pressing through a pressing block for the secondary battery according to the first embodiment of the present invention.
FIG. 13 is a side view illustrating a state during the pressing through the pressing block for the secondary battery according to the first embodiment of the present invention.
FIG. 14 is a side view illustrating a state after the pressing through the pressing block for the secondary battery according to the first embodiment of the present invention.
FIG. 15 is a side view illustrating a state during pressing through a pressing block for the secondary battery according to the second embodiment of the present invention.
FIG. 16 is a side view illustrating a state after the pressing through the pressing block for the secondary battery according to the second embodiment of the present invention.
FIG. 17 is a side view illustrating a state after pressing through a pressing block for the secondary battery according to the third embodiment of the present invention.
FIG. 18 is a side view illustrating a state after pressing through a pressing block for the secondary battery according to the fourth embodiment of the present invention.
FIG. 19 is a planar image of a secondary battery manufactured according to a comparative example.
FIG. 20 is a planar image of a secondary battery manufactured according to a manufacturing example.

### MODE FOR CARRYING OUT THE INVENTION

The objectives, specific advantages, and novel features of the present invention will become more apparent from the following detailed description taken in conjunction with the accompanying drawings. It should be noted that the reference numerals are added to the components of the drawings in the present specification with the same numerals as possible, even if they are illustrated in other drawings. Also, the present invention may be embodied in different forms and should not be construed as limited to the embodiments set forth herein. In the following description of the present invention, the detailed descriptions of related arts which may unnecessarily obscure the gist of the present invention will be omitted.

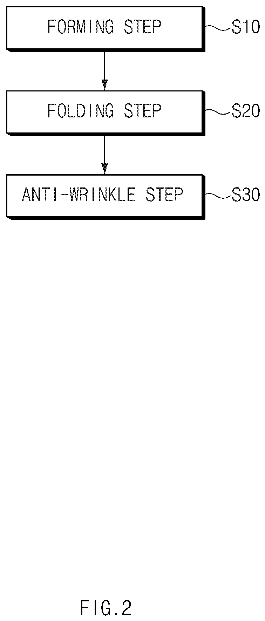

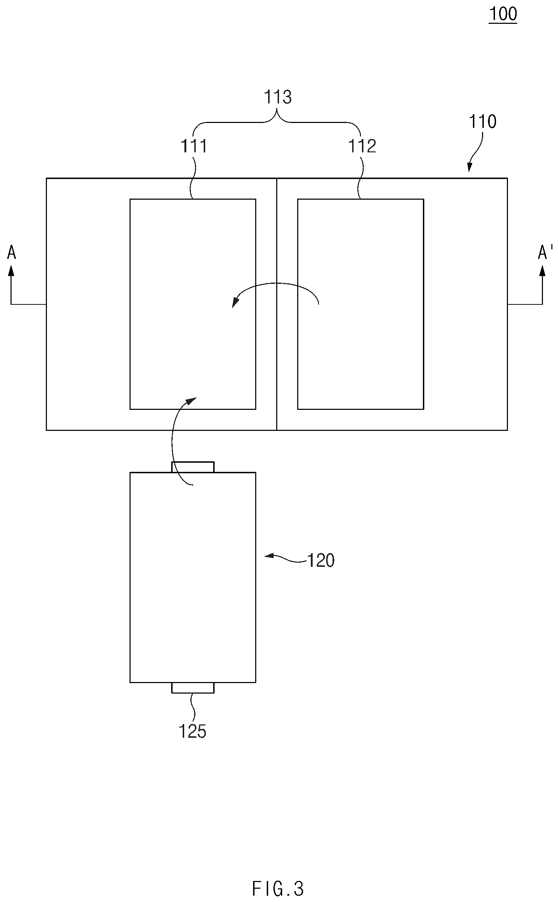

FIG. 2 is a flowchart illustrating a method for manufacturing a secondary battery according to an embodiment of the present invention, and FIG. 3 is a plan view illustrating a forming step in the method for manufacturing the secondary battery according to a first embodiment of the present invention.

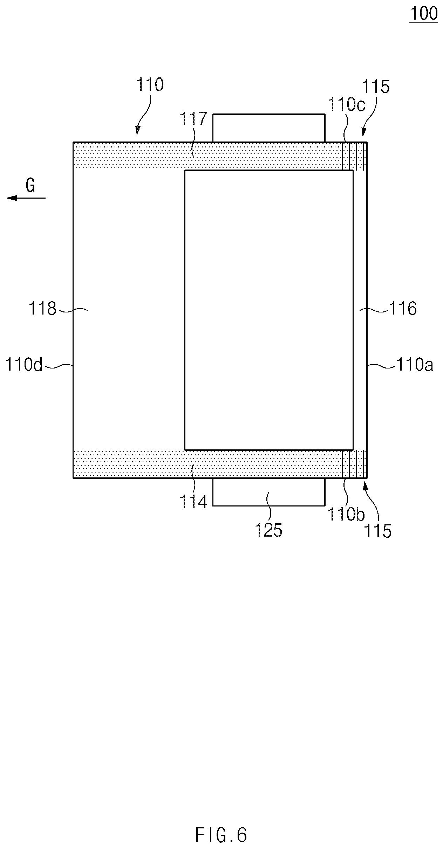

Referring to FIGS. 2 and 3, a method for manufacturing a secondary battery 100 according to a first embodiment of the present invention comprises a forming step (S10) of forming a pouch sheet 110, a folding step (S20) of folding the pouch sheet 110, and an anti-wrinkle step (S30) of forming an anti-wrinkle bending part 115 on an outer shell 114 of the pouch sheet 110. Also, the method for manufacturing the secondary battery according to the first embodiment of the present invention may further comprise a sealing step of sealing the outer shell 114 of the pouch sheet 110 after the folding step (S20) (see FIG. 6).

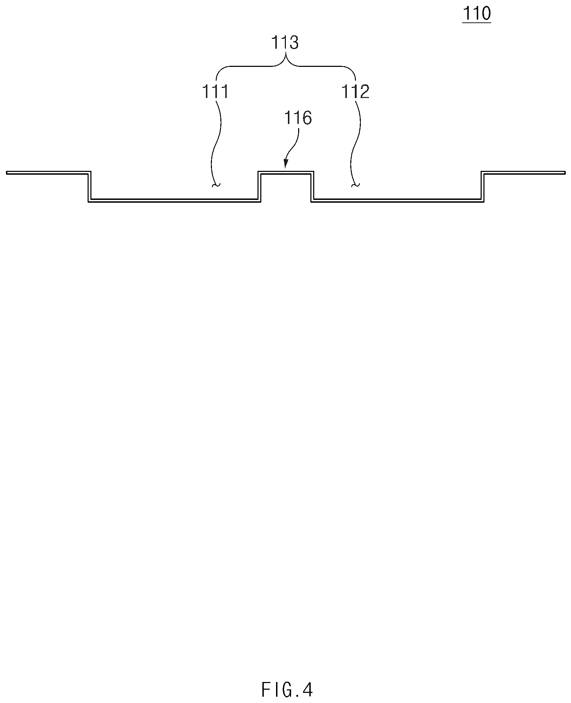

FIG. 4 is a cross-sectional view taken along line A-A' of FIG. 3.

Hereinafter, the method for manufacturing the secondary battery according to the first embodiment of the present invention will be described in more detail with reference to FIGS. 2 to 8.

Referring to FIGS. 2 to 4, in the forming step (S10), the pouch sheet 110 is formed to form an accommodation part 113 in which an electrode assembly 120 is accommodated. Here, the accommodation part 113 may comprise a first accommodation part 111 and a second accommodation part 112.

Also, in the forming step (S10), the first accommodation part 111 and the second accommodation part 112 may be formed symmetrically on both sides with respect to the folding part 116 of the pouch sheet 110.

Furthermore, in the forming step (S10), one surface of the pouch sheet 110 may be pressed to form a groove having an opened top surface, thereby forming the accommodation part 113.

The electrode assembly 120 may be a chargeable and dischargeable power generation element and have a structure in which electrodes (not shown) and separators (not shown) are combined and alternately stacked.

The electrodes may comprise a positive electrode and a negative electrode. Also, each of the separators separates the positive electrode from the negative electrode to electrically insulate the positive electrode from the negative electrode.

The positive electrode may comprise a positive electrode collector (not shown) and a positive electrode active material (not shown) applied to the positive electrode collector, and the negative electrode may comprise a negative electrode collector (not shown) and a negative electrode active material (not shown) applied to the negative electrode collector.

For example, the positive electrode collector may be provided as foil made of an aluminum (Al) material.

The positive electrode active material may comprise, for example, lithium manganese oxide, lithium cobalt oxide, lithium nickel oxide, lithium iron phosphate, or a compound containing at least one of these and mixtures thereof.

For example, the negative electrode collector may be provided as foil made of a copper (Cu) or nickel (Ni) material.

The negative electrode active material may comprise synthetic graphite, lithium a metal, a lithium alloy, carbon, petroleum coke, activated carbon, graphite, a silicon compound, a tin compound, a titanium compound, or an alloy thereof.

The separator is alternately stacked with the positive electrode and the negative electrode, which are made of insulation materials. Here, the separator may be disposed between the positive electrode and the negative electrode and outer surfaces of the positive electrode and the negative electrode. Also, the separator may be provided as, for example, a polyolefin-based resin film such as polyethylene or polypropylene having micropores.

One side of an electrode tab 125 is provided on the electrode and then electrically connected to the electrode. Here, the electrode tab 125 may comprise a positive electrode tab and a negative electrode tab. The positive electrode tab may be electrically connected to the positive electrode, and the negative electrode tab may be electrically connected to the negative electrode.

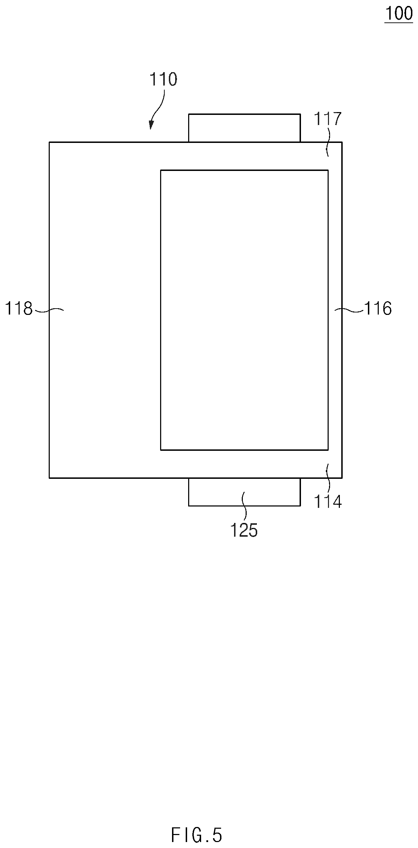

FIG. 5 is a plan view illustrating the folding step (S20) in the method for manufacturing the secondary battery according to the first embodiment of the present invention.

Referring to FIGS. 2, 4, and 5, in the folding step (S20), the electrode assembly 120 may be accommodated in the accommodation part 113 of the pouch sheet 110, and then, the pouch sheet 110 may be folded to form the battery case 110.

Here, in the folding step (S20), the pouch sheet 110 may be folded with respect to a folding part 116 of the pouch sheet 110 so that the accommodation part 113 of the pouch sheet 110 is blocked from the outside.

Also, in the folding step (S20), a bending part for folding may be formed along a virtual line of the folding part 116, and the pouch sheet 110 may be bent to be folded along the bending part for the folding.

Furthermore, in the folding step (S20), the first accommodation part 111 and the accommodation part 112 in the pouch sheet 110 may be folded to face each other. The battery case 110 is formed to comprise the accommodation part 113 and a gas pocket part 118 having a passage extending from the accommodation part 113 through the forming step (S10) and the folding step (S20).

FIG. 6 is a plan view illustrating a sealing step and an anti-wrinkle step in the method for manufacturing the secondary battery according to an embodiment of the present invention.

Referring to FIGS. 2 and 6, in the sealing step (S20), the outer shell of the pouch sheet 110 may be sealed so that a portion of the accommodation part 113 except for a direction of the gas pocket part 118 after the folding step (S20) to form the battery case 110.

Here, in the sealing step, the outer shell of the pouch sheet 110 may be thermally fused to form a first sealing part 114 and a second sealing part 117. Here, according to the invention, the folding part 116 is formed at a first side 110a, the gas pocket part 118 is formed at a fourth side 110d that is opposite to the folding part 116, the first sealing part 114 is formed at a second side 110b, and the second sealing part 117 is formed at a third side 110c in four directions on the outer shell of the battery case 110.

The sealing step may be performed before an anti-wrinkle step (S30) after the folding step (S20).

Furthermore, for another example, the sealing step may be performed together with the anti-wrinkle step (S30) after the folding step (S20).

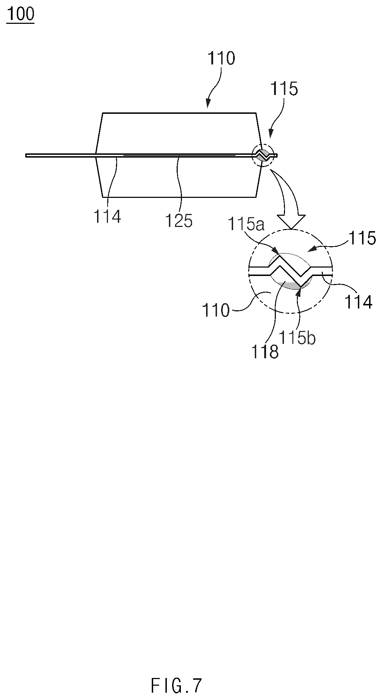

FIG. 6 is a plan view illustrating the sealing step and the anti-wrinkle step in the method for manufacturing the secondary battery according to the first embodiment of the present invention, and FIG. 7 is a side view illustrating the anti-wrinkle step in the method for manufacturing the secondary battery according to the first embodiment of the present invention.

Referring to FIGS. 2, 6, and 7, in the anti-wrinkle step (S30), the outer shall of the pouch sheet 110 may be thermally pressed to form an anti-wrinkle bending part 115.

Here, the outer shell may be thermally pressed to form the anti-wrinkle bending part 115.

Also, in the anti-wrinkle step (S30), the anti-wrinkle bending part 115 may be bent to have a plurality of bent portions. Here, in the anti-wrinkle step (S30), the anti-wrinkle bending part 115 may be bent in a zigzag shape.

Also, in the anti-wrinkle step (S30), for example, the anti-wrinkle bending part 115 may be bent in a bent shape. Here, in the anti-wrinkle step (S30), the anti-wrinkle bending part 115 may be bent to have a first bent part 115a and a second bent part 115b. Here, in the anti-wrinkle step (S30), the anti-wrinkle bending part 115 may be formed to have an "N"-shaped cross-section.

Furthermore, in the anti-wrinkle step (S30), the anti-wrinkle bending part 115 may be formed so that the bent portion is vertically formed with respect to the outer shell that is horizontally formed on one side surface of the battery case 110.

In the anti-wrinkle step (S30), the anti-wrinkle bending part 115 is formed at a folding part-side of each of the first sealing part 114 and the second sealing part 117 on the outer shell of the battery case 110. That is, the anti-wrinkle bending part 115 is formed at a portion of each of the first sealing part 114 and the second sealing part 117, which is in the vicinity of the folding part 116. Here, in the anti-wrinkle step (S30), for example, the anti-wrinkle bending part 115 may be formed to have length of 5% to 15% of a length of each of the first sealing part 114 and the second sealing part 117. The anti-wrinkle bending part 115 may be formed to have a length equal to or greater than 5% of the length of each of the first sealing part 114 and the second sealing part 117 to effectively realize the anti-wrinkle effect at the first sealing part 114 and the second sealing part 117. The anti-wrinkle bending part 115 may be formed to have a length equal to or less than 15% of each of the length of each of the first sealing part 114 and the second sealing part 117 to improve workability. Here, in the anti-wrinkle step (S30), for example, the anti-wrinkle bending part 115 may be formed to have a length corresponding to 10% of the length of each of the first sealing part 114 and the second sealing part 117. Here, in the anti-wrinkle step (S30), when the anti-wrinkle bending part 115 is bent, a bending line may be formed from the first sealing part 114 and the second sealing part 117 toward the gas pocket part 118. That is, in the anti-wrinkle step (S30), a bending line may be formed in a parallel to a gas discharge direction G on the gas pocket part 118.

Also, in the anti-wrinkle step (S30), for another example, the anti-wrinkle bending part 115 may be formed over the entire first and second sealing parts 114 and 117 on the outer shell of the battery case 110.

Furthermore, in the anti-wrinkle step (S30), for another example, the anti-wrinkle bending part 115 may be formed at the folding part 116 on the outer shell of the battery case 110.

Also, in the anti-wrinkle step (S30), for another example, the anti-wrinkle bending part 115 may be formed at the first sealing part 114, the second sealing part 117, and the folding part 116 on the outer shell of the battery case 110.

In the anti-wrinkle step (S30), a shape retaining part 118 may be further formed on an outer surface of the anti-wrinkle bending part 115 to retain a shape of the anti-wrinkle bending part 115. Here, the shape retaining part 118 may prevent the anti-wrinkle bending part 115 from being deformed and also prevent the anti-wrinkle effect of the pouch sheet 110 from being deteriorated due to the deformation of the anti-wrinkle bending part 115. Here, in the anti-wrinkle step (S30), the shape retaining part 118 may be applied to the outer surface of the anti-wrinkle bending part 115.

Also, the shape retaining part 118 may be made of an insulating material and a heat-resistance material. Here, the shape retaining part 118 may be made of, for example, silicone. Thus, the shape retaining part 118 may retain the shape of the anti-wrinkle bending part 115 without being damaged by heat having a high temperature.

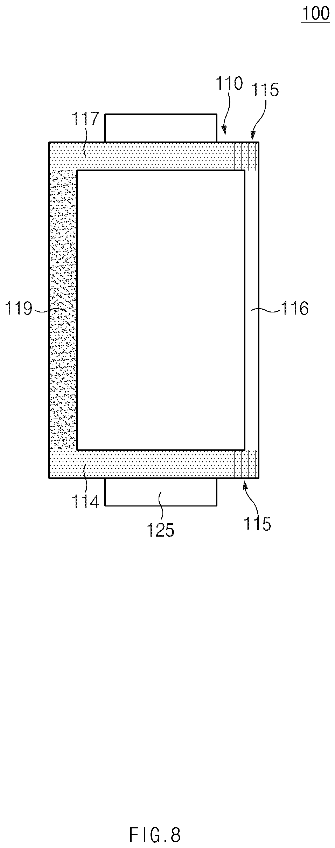

FIG. 8 is a plan view illustrating the sealing step in the method for manufacturing the secondary battery according to the first embodiment of the present invention.

Referring to FIGS. 2, 4, and 8, in the sealing step, the cut portion of the gas pocket part may be sealed to seal the accommodation part 113 after the anti-wrinkle step (S30).

Here, in the sealing step, the cut portion of the gas pocket part 118 may be thermally fused to form a third sealing part 119, thereby safely sealing the battery case 110.

Thus, referring to FIGS. 2, 6, and 7, in the method for manufacturing the secondary battery according to the first embodiment of the present invention, the anti-wrinkle bending part 115 may be formed on the outer shell of the battery case 110 of the secondary battery through the anti-wrinkle step (S30) to prevent the wrinkles from being generated over the outer shell and the vicinity of the outer shell. Particularly, when the vacuum is applied to discharge the internal gas of the battery case 110 to the outside, the wrinkle having the bat-ear shape may be prevented from being generated on the outer shell of the battery case 110 and in the vicinity of the outer shell. Here, the anti-wrinkle bending part 115 may be disposed at the opposite side of the gas pocket part 118, through which the internal gas is discharged, on the outer shell of the battery case 110. Thus, when the vacuum is applied, the anti-wrinkle bending part 115 may support the opposite side of the gas pocket part 118 and effectively prevent the wrinkles from being generated on the folding part 116 that is the opposite side of the gas pocket part 118 and the surrounding portion of the folding part-side on the first and second sealing parts 114 and 117, which are in the vicinity of the folding part 116. Also, after the secondary battery 100 is manufactured, even when a gas generated during the use (charging and discharging) is discharged, the wrinkles of the battery case 10 and the occurrence of the wrinkle may be significantly reduced.

Here, the process of discharging the internal gas of the battery case 110 may be, for example, performed for discharging the internal gas generated while the charging/discharging of the secondary battery to activate the secondary battery in the process of manufacturing the secondary battery or performed for discharging the internal gas generated while the charging/discharging of the secondary battery during the use of the secondary battery.

Also, the anti-wrinkle bending part 115 may be formed on the outer shell of the battery case 110, and the shape retaining part 118 may be applied to the outer surface of the anti-wrinkle bending part 115 to more effectively prevent the anti-wrinkle bending part 115 from being deformed. Thus, the occurrence of the wrinkles on the outer shell and the portion of the battery case 110, which is in the vicinity of the outer shell, may be prevented, and the deformation of the outer appearance of the battery case 110 and the occurrence of cracks in the battery case 110 due to the occurrence of the wrinkles may be prevented.

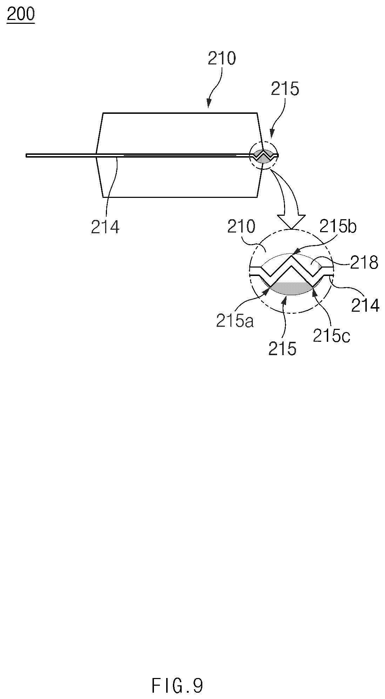

FIG. 9 is a side view illustrating an anti-wrinkle step in a method for manufacturing a secondary battery according to a second embodiment of the present invention.

Referring to FIGS. 2 and 9, a method for manufacturing a secondary battery 200 according to a second embodiment of the present invention comprises a forming step (S10) of forming a pouch sheet 210, a folding step (S20) of folding the pouch sheet 210, and an anti-wrinkle step (S30) of forming an anti-wrinkle bending part 215 on an outer shell of the pouch sheet 210. Also, the method for manufacturing the secondary battery according to the second embodiment of the present invention may further comprise a sealing step of sealing an outer circumferential surface of the pouch sheet 210 after the folding step (S20).

The method for manufacturing the secondary battery according to the second embodiment of the present invention is the same as the method for manufacturing the secondary battery according to the first embodiment of the present invention except for an anti-wrinkle bending part 215 formed through an anti-wrinkle step (S30).

Thus, contents of this embodiment, which are duplicated with those according to the first embodiment, will be briefly described, and also, differences therebetween will be mainly described. In detail, in the method for manufacturing the secondary battery according to the second embodiment of the present invention, in the anti-wrinkle step (S30), a first sealing part 214 and a second sealing part of a pouch sheet 210 may be thermally compressed to form an anti-wrinkle bending part 215.

Also, in the anti-wrinkle step (S30), the anti-wrinkle bending part 215 may be bent to have a plurality of bent portions. Here, in the anti-wrinkle step (S30), the anti-wrinkle bending part 215 may be bent in a zigzag shape.

Also, in the anti-wrinkle step (S30), for example, the anti-wrinkle bending part 215 may be bent in a bent shape. Here, in the anti-wrinkle step (S30), the anti-wrinkle bending part 115 may be bent to have a first bent part 215a, a second bent part 215b, and a third bent part 215c. Here, for example, the anti-wrinkle bending part 215 may be formed to have an "W"-shaped cross-section.

In the anti-wrinkle step (S30), the anti-wrinkle bending part 215 may be formed so that the bent portion is vertically formed with respect to the first sealing part 214 and the second sealing part, which are horizontally formed on one side of the battery case 210. Here, in the anti-wrinkle step (S30), the anti-wrinkle bending part 215 may be formed at a folding part-side of each of the first sealing part 214 and the second sealing part, which are adjacent to the folding part.

In the anti-wrinkle step (S30), a shape retaining part 218 may be further formed on an outer surface of the anti-wrinkle bending part 215 to retain a shape of the anti-wrinkle bending part 215. Here, the shape retaining part 218 may prevent the anti-wrinkle bending part 215 from being deformed and also prevent the anti-wrinkle effect of the pouch sheet 210 from being deteriorated due to the deformation of the anti-wrinkle bending part 215. Here, in the anti-wrinkle step (S30), the shape retaining part 218 may be applied to the outer surface of the anti-wrinkle bending part 215.

Also, the shape retaining part 218 may be made of an insulating material and a heat-resistance material. Here, the shape retaining part 218 may be made of, for example, silicone.

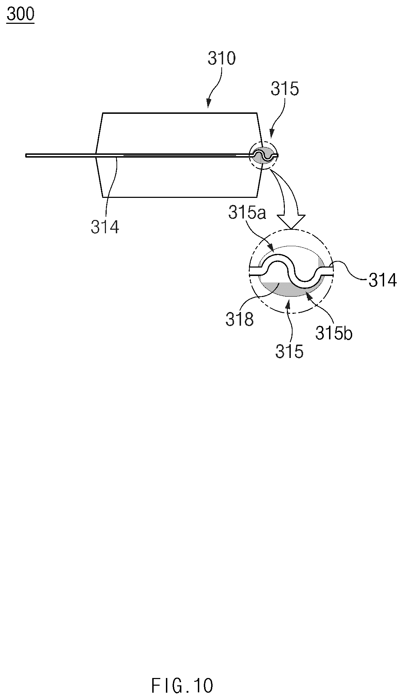

FIG. 10 is a side view illustrating an anti-wrinkle step in a method for manufacturing a secondary battery according to a third embodiment of the present invention.

Referring to FIGS. 2 and 10, a method for manufacturing a secondary battery 300 according to a third embodiment of the present invention comprises a forming step (S10) of forming a pouch sheet 310, a folding step (S20) of folding the pouch sheet 310, and an anti-wrinkle step (S30) of forming an anti-wrinkle bending part 315 on an outer shell of the pouch sheet 310. Also, the method for manufacturing the secondary battery according to the third embodiment of the present invention may further comprise a sealing step of sealing an outer circumferential surface of the pouch sheet 310 after the folding step (S20).

The method for manufacturing the secondary battery according to the third embodiment of the present invention is the same as the method for manufacturing the secondary battery according to the first and second embodiments of the present invention except for an anti-wrinkle bending part 315 formed through an anti-wrinkle step (S30).

Thus, contents of this embodiment, which are duplicated with those according to the forgoing embodiments, will be briefly described, and also, differences therebetween will be mainly described.

In detail, in the method for manufacturing the secondary battery according to the third embodiment of the present invention, in the anti-wrinkle step (S30), a first sealing part 314 and a second sealing part of a pouch sheet 310 may be thermally compressed to form an anti-wrinkle bending part 315.

Also, in the anti-wrinkle step (S30), the anti-wrinkle bending part 315 may be bent to have a plurality of bent portions.

Furthermore, in the anti-wrinkle step (S30), the anti-wrinkle bending part 315 may be bent in a semicircular shape. Here, in the anti-wrinkle step (S30), the anti-wrinkle bending part 315 may be formed so that convex portions of a plurality of semicircles are alternately arranged in an upward and downward direction. Here, for example, the anti-wrinkle bending part 315 may have a cross-section having a semicircular pulse shape.

Also, in the anti-wrinkle step (S30), the anti-wrinkle bending part 315 may be bent to have a first bent part 315a and a second bent part 315b. Here, in the anti-wrinkle step (S30), for example, the anti-wrinkle bending part 315 may be formed to have an "S"-shaped cross-section.

In the anti-wrinkle step (S30), the anti-wrinkle bending part 315 may be formed so that the bent portion is vertically formed with respect to the first sealing part 314 and the second sealing part, which are horizontally formed on one side of the battery case 310. Here, in the anti-wrinkle step (S30), the anti-wrinkle bending part 315 may be formed at a folding part-side of each of the first sealing part 314 and the second sealing part, which are adjacent to the folding part.

In the anti-wrinkle step (S30), a shape retaining part 118 may be further formed on an outer surface of the anti-wrinkle bending part 315 to retain a shape of the anti-wrinkle bending part 315. Here, the shape retaining part 318 may prevent the anti-wrinkle bending part 315 from being deformed and also prevent the anti-wrinkle effect of the pouch sheet 310 from being deteriorated due to the deformation of the anti-wrinkle bending part 315. Here, in the anti-wrinkle step (S30), the shape retaining part 318 may be applied to the outer surface of the anti-wrinkle bending part 315.

Also, the shape retaining part 318 may be made of an insulating material and a heat-resistance material. Here, the shape retaining part 318 may be made of, for example, silicone.

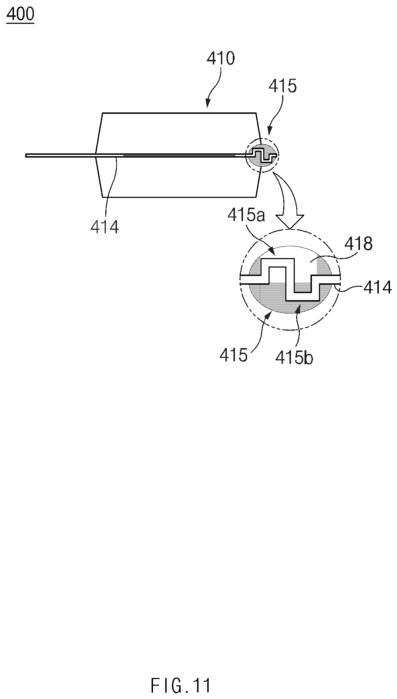

FIG. 11 is a side view illustrating an anti-wrinkle step in a method for manufacturing a secondary battery according to a fourth embodiment of the present invention.

Referring to FIGS. 2 and 11, a method for manufacturing a secondary battery 400 according to a fourth embodiment of the present invention comprises a forming step (S10) of forming a pouch sheet 410, a folding step (S20) of folding the pouch sheet 410, and an anti-wrinkle step (S30) of forming an anti-wrinkle bending part 415 on an outer shell of the pouch sheet 410. Also, the method for manufacturing the secondary battery according to the fourth embodiment of the present invention may further comprise a sealing step of sealing an outer circumferential surface of the pouch sheet 410 after the folding step (S20).

The method for manufacturing the secondary battery according to the fourth embodiment of the present invention is the same as the method for manufacturing the secondary battery according to the first to third embodiments of the present invention except for an anti-wrinkle bending part 415 formed through an anti-wrinkle step (S30).

Thus, contents of this embodiment, which are duplicated with those according to the forgoing embodiments, will be briefly described, and also, differences therebetween will be mainly described.

In detail, in the method for manufacturing the secondary battery according to the fourth embodiment of the present invention, in the anti-wrinkle step (S30), a first sealing part 414 and a second sealing part of a pouch sheet 410 may be thermally compressed to form an anti-wrinkle bending part 415.

Also, in the anti-wrinkle step (S30), the anti-wrinkle bending part 415 may be bent to have a plurality of bent portions. Here, in the anti-wrinkle step (S30), for example, the anti-wrinkle bending part 415 may be bent in a bent shape. Furthermore, in the anti-wrinkle step (S30), the anti-wrinkle bending part 415 may be bent in a rectangular shape. Here, in the anti-wrinkle step (S30), the anti-wrinkle bending part 415 may be formed so that convex portions of a plurality of rectangular shapes are alternately arranged in an upward and downward direction. Here, for example, the anti-wrinkle bending part 415 may have a cross-section having a rectangular pulse shape.

Also, in the anti-wrinkle step (S30), the anti-wrinkle bending part 415 may be bent to have a first bent part 415a and a second bent part 415b. Here, for example, the first bent part 415a may be formed as a convex portion, and the second bent part 415b may be formed as a concave portion.

In the anti-wrinkle step (S30), the anti-wrinkle bending part 415 may be formed so that the bent portion is vertically formed with respect to the first sealing part 414 and the second sealing part, which are horizontally formed on one side and the other side surface of the battery case 410. Here, in the anti-wrinkle step (S30), the anti-wrinkle bending part 415 may be formed at a folding part-side of each of the first sealing part 414 and the second sealing part, which are adjacent to the folding part.

In the anti-wrinkle step (S30), a shape retaining part 118 may be further formed on an outer surface of the anti-wrinkle bending part 415 to retain a shape of the anti-wrinkle bending part 415. Here, the shape retaining part 418 may prevent the anti-wrinkle bending part 415 from being deformed and also prevent the anti-wrinkle effect of the pouch sheet 410 from being deteriorated due to the deformation of the anti-wrinkle bending part 415. Here, in the anti-wrinkle step (S30), the shape retaining part 418 may be applied to the outer surface of the anti-wrinkle bending part 415.

Also, the shape retaining part 418 may be made of an insulating material and a heat-resistance material. Here, the shape retaining part 418 may be made of, for example, silicone.

Referring to FIGS. 3 and 7, the secondary battery 100 according to the first embodiment of the present invention comprises an electrode assembly 120 and a battery case 110 which accommodates the electrode assembly 120 therein and on which the anti-wrinkle bending part 115 is formed on an outer shell thereof.

The secondary battery 100 according to the first embodiment of the present invention relates to the secondary battery 100 manufactured through the method of manufacturing the secondary battery according to the foregoing first embodiment of the present invention, and thus, duplicated contents will be briefly described, and differences will be mainly described.

In the electrode assembly 120, electrodes and separators may be alternately combined and stacked on each other.

The battery case 110 is formed by folding a pouch sheet 110 to accommodate the electrode assembly 120.

Referring to FIGS. 6 to 8, an anti-wrinkle bending part 115 may be formed on an outer shell to prevent wrinkles from being generated on the battery case 110.

Also, the anti-wrinkle bending part 115 may be bent to have a plurality of bent portions through thermal compression, thereby preventing the wrinkles from being generated on the outer shell of the battery case and portions that are in the vicinity of the outer shell. Here, the anti-wrinkle bending part 115 may be bent, for example, in a zigzag shape.

A folding part 116 may be formed at a first side 110a in a fourth direction on the outer shell of the battery case 110, a first sealing part 114 and a second sealing part 117 may be formed at a second side 110b and a third side 110c in both directions of the folding part 116, and the anti-wrinkle bending part 115 may be formed on the first sealing part 114 and the second sealing part 117.

Also, the anti-wrinkle bending part 115 may be, for example, formed on the folding part 116 of each of the first sealing part 114 and the second sealing part 116 on the outer shell of the battery case 110. That is, the anti-wrinkle bending part 115 may be formed at a portion of each of the first sealing part 114 and the second sealing part 117, which is in the vicinity of the folding part 116. Here, the anti-wrinkle bending part 115 may have, for example, a length corresponding to 5% to 15% of a length of each of the first sealing part 114 and the second sealing part 117. Particularly, the anti-wrinkle bending part 115 may have, for example, a length corresponding to 10% of a length of each of the first sealing part 114 and the second sealing part 117.

Also, the anti-wrinkle bending part 115 may be formed over the entire first and second sealing parts 114 and 117 on the outer shell of the battery case 110.

For another example, the anti-wrinkle bending part 115 may be formed at the folding part 116 on the outer shell of the battery case 110.

Also, for another example, the anti-wrinkle bending part 115 may be formed at the first sealing part 114, the second sealing part 117, and the folding part 116 on the outer shell of the battery case 110.

The anti-wrinkle bending part 115 may be bent to have a first bent part 115a and a second bent part 115b. Here, the anti-wrinkle bending part 115 may have, for example, an "N"-shaped cross-section.

The secondary battery 100 according to the first embodiment of the present invention may further comprise a shape retaining part 118 provided on an outer surface of the anti-wrinkle bending part 115 to retain a shape of the anti-wrinkle bending part 115. Here, the shape retaining part 118 may prevent the anti-wrinkle bending part 115 from being deformed and also prevent the anti-wrinkle effect of the pouch sheet 110 from being deteriorated due to the deformation of the anti-wrinkle bending part 115.

The shape retaining part 118 may be formed to be applied to the outer surface of the anti-wrinkle bending part 115.

Here, the shape retaining part 118 may be made of an insulating material and a heat-resistance material. Here, the shape retaining part 118 may be made of, for example, silicone.

Referring to FIG. 9, the secondary battery 200 according to the second embodiment of the present invention comprises an electrode assembly 120 and a battery case 210 which accommodates the electrode assembly 120 therein and on which the anti-wrinkle bending part 115 is formed on an outer shell thereof (see FIG. 3).

The secondary battery 200 according to the second embodiment of the present invention is the same as the secondary battery according to the first embodiment of the present invention except for a bent shape of the anti-wrinkle bending part 215.

Here, in the secondary battery 200 according to the second embodiment of the present invention, the anti-wrinkle bending part 215 may be bent in a bent shape.

Here, the anti-wrinkle bending part 215 may be bent to have a first bent part 215a, a second bent part 215b, and a third bent part 215c. Here, the anti-wrinkle bending part 215 may have, for example, a "W"-shaped cross-section.

The secondary battery 200 according to the second embodiment of the present invention may further comprise a shape retaining part 218 provided on an outer surface of the anti-wrinkle bending part 215 to retain a shape of the anti-wrinkle bending part 215. Here, the shape retaining part 218 may prevent the anti-wrinkle bending part 215 from being deformed and also prevent the anti-wrinkle effect of the pouch sheet 210 from being deteriorated due to the deformation of the anti-wrinkle bending part 215.

The shape retaining part 218 may be formed to be applied to the outer surface of the anti-wrinkle bending part 215.

Here, the shape retaining part 218 may be made of an insulating material and a heat-resistance material. Here, the shape retaining part 218 may be made of, for example, silicone.

Referring to FIG. 10, the secondary battery 300 according to the third embodiment of the present invention comprises an electrode assembly 120 and a battery case 310 which accommodates the electrode assembly 120 therein and on which the anti-wrinkle bending part 115 is formed on an outer shell thereof (see FIG. 3).

The secondary battery 300 according to the third embodiment of the present invention is the same as the secondary batteries according to the first and second embodiments of the present invention except for a bent shape of an anti-wrinkle bending part 315.

In detail, in the secondary battery according to the third embodiment of the present invention, the anti-wrinkle bending part 315 may be formed to have a plurality of bent portions.

Furthermore, the anti-wrinkle bending part 315 may be bent in a plurality of semicircular shapes. Here, the anti-wrinkle bending part 315 may be formed so that convex portions of a plurality of semicircles are alternately arranged in an upward and downward direction. Here, for example, the anti-wrinkle bending part 315 may have a cross-section having a semicircular pulse shape.

Also, the anti-wrinkle bending part 315 may be bent to have a first bent part 315a and a second bent part 315b. Here, the anti-wrinkle bending part 315 may be formed to have an "S"-shaped cross-section.

The secondary battery 300 according to the third embodiment of the present invention may further comprise a shape retaining part 318 provided on an outer surface of the anti-wrinkle bending part 215 to retain a shape of the anti-wrinkle bending part 315. Here, the shape retaining part 318 may prevent the anti-wrinkle bending part 315 from being deformed and also prevent the anti-wrinkle effect of the pouch sheet 310 from being deteriorated due to the deformation of the anti-wrinkle bending part 315.

The shape retaining part 318 may be formed to be applied to the outer surface of the anti-wrinkle bending part 315.

Here, the shape retaining part 318 may be made of an insulating material and a heat-resistance material. Here, the shape retaining part 318 may be made of, for example, silicone.

Referring to FIG. 10, the secondary battery 400 according to the fourth embodiment of the present invention comprises an electrode assembly 120 and a battery case 410 which accommodates the electrode assembly 120 therein and on which the anti-wrinkle bending part 115 is formed on an outer shell thereof (see FIG. 3).

The secondary battery 400 according to the fourth embodiment of the present invention is the same as the secondary batteries according to the first to third embodiments of the present invention except for a bent shape of an anti-wrinkle bending part 415.

In detail, in the secondary battery according to the fourth embodiment of the present invention, the anti-wrinkle bending part 415 may be formed to have a plurality of bent portions.

Also, the anti-wrinkle bending part 415 may be, for example, bent in a bent shape. Here, the anti-wrinkle bending part 415 may be bent in a plurality of rectangular shapes. Here, the anti-wrinkle bending part 415 may be formed so that convex portions of a plurality of rectangles are alternately arranged in an upward and downward direction. Here, for example, the anti-wrinkle bending part 415 may have a cross-section having a rectangular pulse shape.

Also, the anti-wrinkle bending part 415 may be formed to comprise a first bent part 415a and a second bent part 415b. Here, for example, the first bent part 415a may be formed as a convex portion, and the second bent part 415b may be formed as a concave portion.

The secondary battery 400 according to the fourth embodiment of the present invention may further comprise a shape retaining part 418 provided on an outer surface of the anti-wrinkle bending part 415 to retain a shape of the anti-wrinkle bending part 415. Here, the shape retaining part 418 may prevent the anti-wrinkle bending part 415 from being deformed and also prevent the anti-wrinkle effect of the pouch sheet 410 from being deteriorated due to the deformation of the anti-wrinkle bending part 415.

Here, the shape retaining part 418 may be applied to the outer surface of the anti-wrinkle bending part 415.

Here, the shape retaining part 418 may be made of an insulating material and a heat-resistance material. Here, the shape retaining part 418 may be made of, for example, silicone.

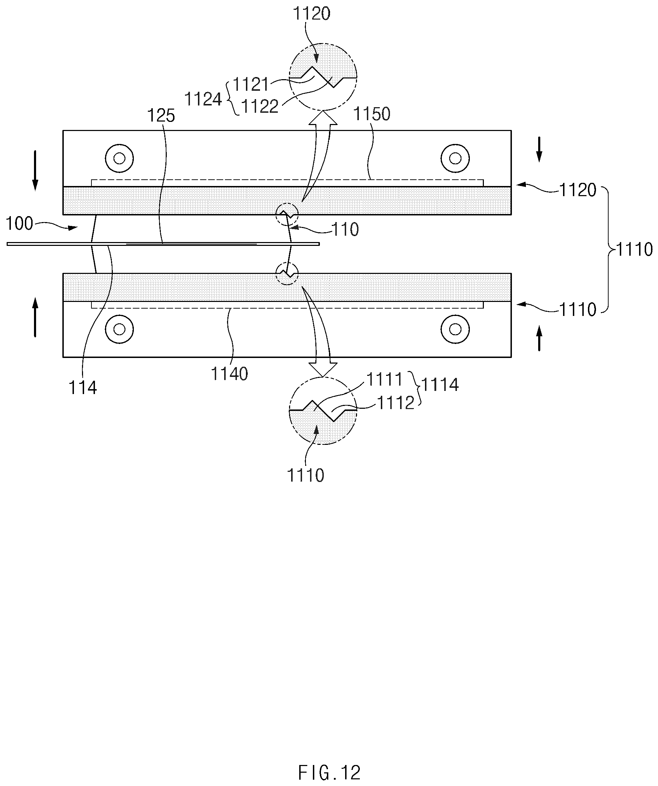

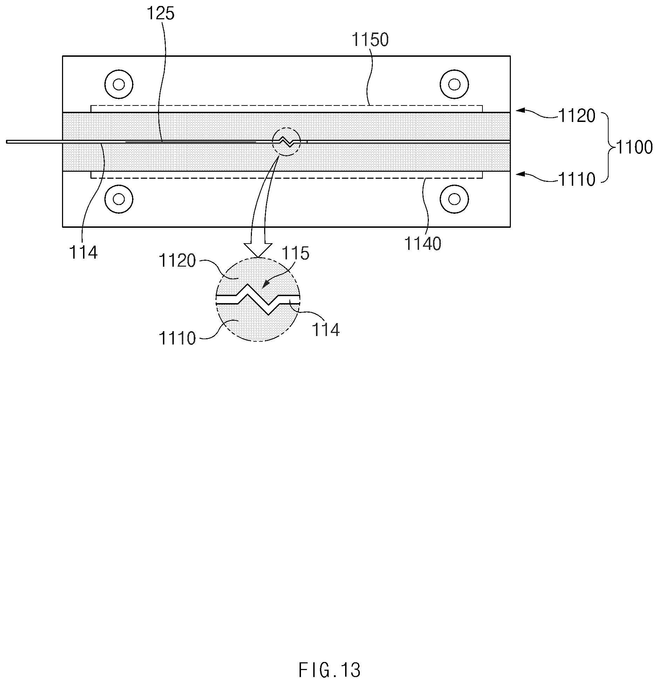

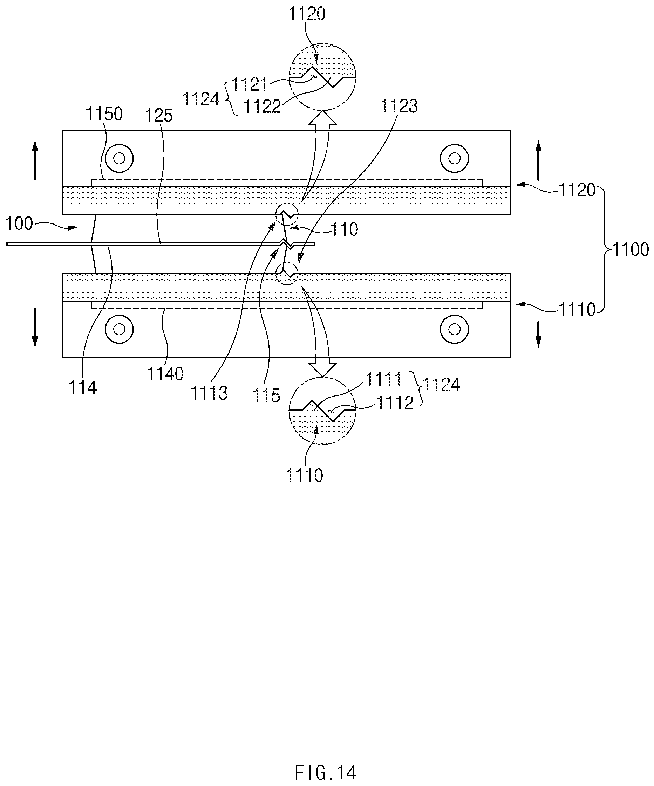

FIG. 12 is a side view illustrating a state before pressing through a pressing block for the secondary battery according to the first embodiment of the present invention, FIG. 13 is a side view illustrating a state during the pressing through the pressing block for the secondary battery according to the first embodiment of the present invention, and FIG. 14 is a side view illustrating a state after the pressing through the pressing block for the secondary battery according to the first embodiment of the present invention.

Referring to FIGS. 12 to 14, a pressing block 1100 for the secondary battery according to the first embodiment of the present invention may be provided in plurality, and the plurality of pressing blocks 1100 may move in a direction facing each other to press an outer shell of the pouch sheet 110 in which the electrode assembly 120 is accommodated. Here, the pressing block 1100 may comprise a first pressing block 1100 and a second pressing block 1120, which move in the direction facing each other to press the outer shell (see FIG. 3).

Also, when the pressing block 1100 presses the outer shell of the pouch sheet 110, bending formation parts 314 and 324 are formed on a pressing surface of the pressing block 1100 so that an anti-wrinkle bending part 115 is formed on the outer shell.

Here, the bending formation parts 1114 and 1124 may comprise convex parts 1111 and 1122 and concave parts 1112 and 1121 to form the anti-wrinkle bending part 115 on the outer shell when pressing. Here, the convex parts 1111 and 1122 may protrude from the pressing surface, and the concave parts 1112 and 1121 may be formed as grooves that are recessed from the pressing surface. Here, to form the anti-wrinkle bending part 115 on the outer shell by using the convex parts 1111 and 1122 and the concave parts 1112 and 1121, each of the convex parts 1111 and 1122 may protrude in a triangular shape, and each of the concave parts 1112 and 1121 may be recessed in a triangular shape.

Also, the bending formation parts 1114 and 1124 formed in the first pressing block 1110 and the second pressing block 1120 may be formed in shapes corresponding to each other in the direction facing each other.

Also, each of the bending formation parts 1114 and 1124 may have, for example, an "N"-shaped cross-section.

The pressing block 1100 for the secondary battery according to the first embodiment of the present invention may further comprise heaters 340 and 350 for transferring heat to the plurality of pressing blocks 1100. Thus, the heat may be applied to the outer shell of the pouch sheet 110 to perform thermal compression through the plurality of pressing blocks 1100.

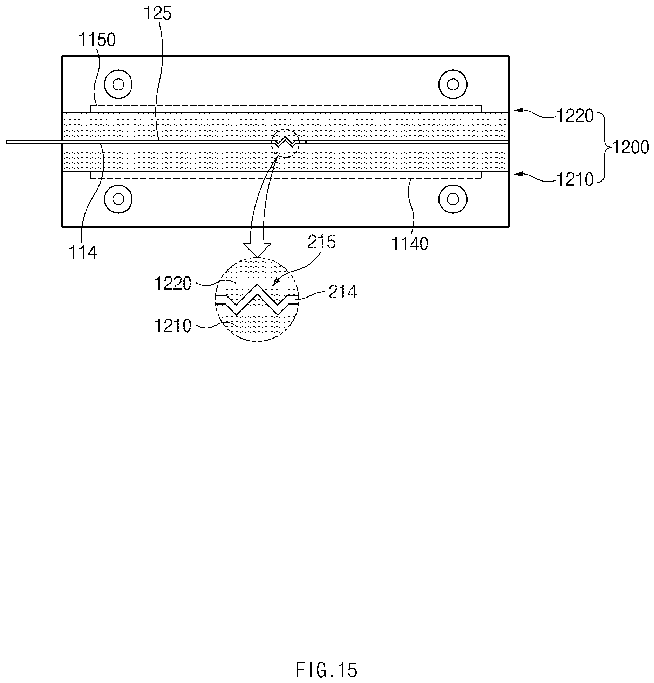

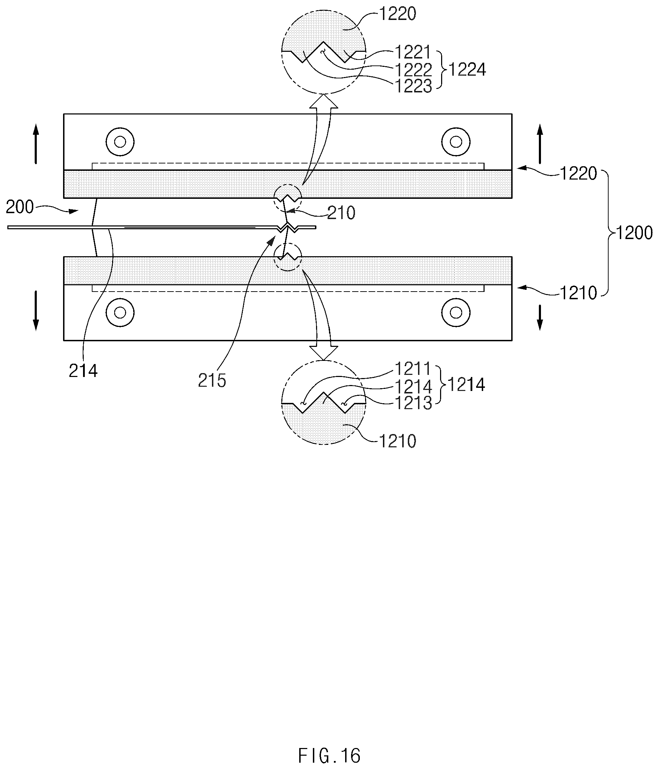

FIG. 15 is a side view illustrating a state during pressing through a pressing block for the secondary battery according to the second embodiment of the present invention, and FIG. 16 is a side view illustrating a state after the pressing through the pressing block for the secondary battery according to the second embodiment of the present invention.

Referring to FIGS. 15 to 16, a pressing block 1200 for the secondary battery according to the second embodiment of the present invention may be provided in plurality, and the plurality of pressing blocks 1200 may move in a direction facing each other to press a first sealing part 214 and a second sealing part of the pouch sheet 210 in which the electrode assembly is accommodated. Here, the pressing block 1200 may comprise a first pressing block 1210 and a second pressing block 1220, which move in a direction facing each other to press a first sealing part 214 and a second sealing part.

The pressing block 1200 for the secondary battery according to the second embodiment of the present invention is the same as the pressing block for the secondary battery according to the first embodiment of the present invention except for a shape of each of bending formation parts 1214 and 1224.

Here, in the pressing block 1200 for the secondary battery according to the second embodiment of the present invention, the bending formation parts 1214 and 1224 may comprise convex parts 1212, 1221, and 1223 and concave parts 1211, 1213, and 1222 to form an anti-wrinkle bending part 215 on a first sealing part 214 and a second sealing part when pressing. Here, the convex parts 1212, 1221, and 1223 may protrude from the pressing surface, and the concave parts 1211, 1213, and 1222 may be formed as grooves that are recessed from the pressing surface. Here, to form the anti-wrinkle bending part 215 on the first sealing part 214 and the second sealing part by using the convex parts 11212, 1221, and 1223 and the concave parts 1211, 1213, and 1222, each of the convex parts 11212, 1221, and 1223 may protrude in a triangular shape, and each of the concave parts 1211, 1213, and 1222 may be recessed in a triangular shape.

Also, the bending formation parts 1214 and 1224 formed in the first pressing block 1210 and the second pressing block 1220 may be formed in shapes corresponding to each other in the direction facing each other.

Also, each of the bending formation parts 1214 and 1224 may have, for example, a "W"-shaped cross-section.

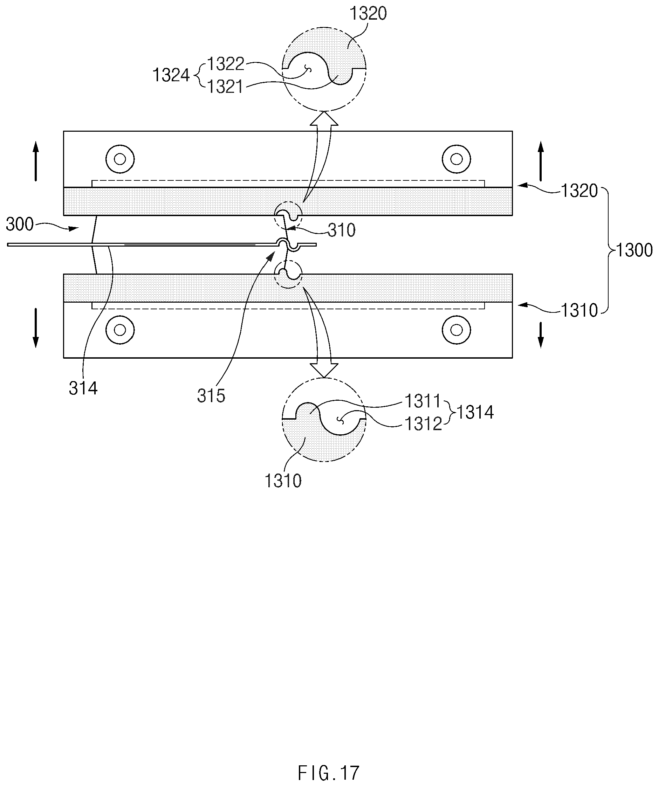

FIG. 17 is a side view illustrating a state after pressing through a pressing block for the secondary battery according to the third embodiment of the present invention.

Referring to FIG. 17, a pressing block 1300 for the secondary battery according to the third embodiment of the present invention may be provided in plurality, and the plurality of pressing blocks 1300 may move in a direction facing each other to press a first sealing part 314 and a second sealing part of the pouch sheet 310 in which the electrode assembly is accommodated. Here, the pressing block 1300 may comprise a first pressing block 1310 and a second pressing block 1320, which move in a direction facing each other to press a first sealing part 314 and a second sealing part.

The pressing block 1200 for the secondary battery according to the third embodiment of the present invention is the same as the pressing block for the secondary battery according to the first embodiment of the present invention except for a shape of each of bending formation parts 1314 and 1324.

In more detail, in the pressing block 1300 for the secondary battery according to the third embodiment of the present invention, the bending formation parts 1314 and 1324 may comprise convex parts 1311 and 1321 and concave parts 1312 and 1321 to form an anti-wrinkle bending part 315 on a first sealing part 314 and a second sealing part when pressing.

The convex parts 1311 and 1322 may protrude from the pressing surface, and the concave parts 1312 and 1321 may be formed as grooves that are recessed from the pressing surface. Also, to form the anti-wrinkle bending part 315 on the first sealing part 314 and the second sealing part by using the convex parts 1311 and 1322 and the concave parts 1312 and 1321, each of the convex parts 1311 and 1322 may protrude in a semicircular shape, and each of the concave parts 1312 and 1321 may be recessed in a semicircular shape. Here, for example, each of the bending formation parts 1314 and 1324 may have a cross-section having a semicircular pulse shape. Here, each of the bending formation parts 1314 and 1324 may have, for example, an "S"-shaped cross-section.

Also, the bending formation parts 1314 and 1324 formed in the first pressing block 1310 and the second pressing block 1320 may be formed in shapes corresponding to each other in the direction facing each other.

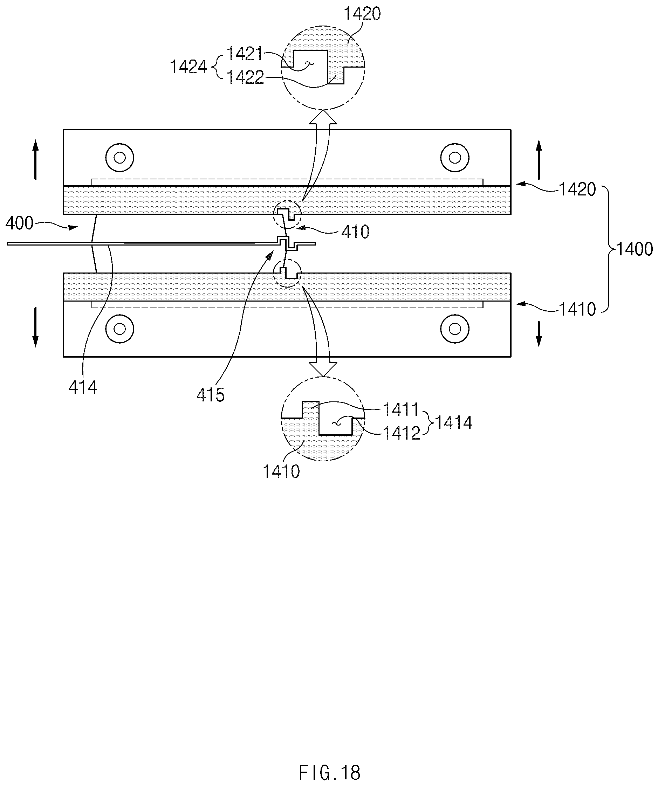

FIG. 18 is a side view illustrating a state after pressing through a pressing block for the secondary battery according to the fourth embodiment of the present invention.

Referring to FIG. 18, a pressing block 1400 for the secondary battery according to the fourth embodiment of the present invention may be provided in plurality, and the plurality of pressing blocks 1400 may move in a direction facing each other to press and compress a first sealing part 414 and a second sealing part of the pouch sheet 410 in which the electrode assembly is accommodated. Here, the pressing block 1400 may comprise a first pressing block 1410 and a second pressing block 1420, which move in a direction facing each other to press a first sealing part 414 and a second sealing part.

The pressing block 1400 for the secondary battery according to the fourth embodiment of the present invention is the same as the pressing block for the secondary battery according to the first to third embodiments of the present invention except for a shape of each of bending formation parts 1414 and 1424.

In more detail, in the pressing block 1400 for the secondary battery according to the fourth embodiment of the present invention, the bending formation parts 1414 and 1424 may comprise convex parts 1411 and 1422 and concave parts 1412 and 1421 to form an anti-wrinkle bending part 415 on a first sealing part 414 and a second sealing part when pressing.

The convex parts 1411 and 1422 may protrude from the pressing surface, and the concave parts 1412 and 1421 may be formed as grooves that are recessed from the pressing surface. Also, to form the anti-wrinkle bending part 415 on the first sealing part 414 and the second sealing part by using the convex parts 1411 and 1422 and the concave parts 1412 and 1421, each of the convex parts 1411 and 1422 may protrude in a rectangular shape, and each of the concave parts 1412 and 1421 may be recessed in a rectangular shape. Here, each of the bending formation parts 1414 and 1424 may have, for example, a cross-section having a rectangular pulse shape.

Also, the bending formation parts 1414 and 1424 formed in the first pressing block 1410 and the second pressing block 1420 may be formed in shapes corresponding to each other in the direction facing each other.

### <Manufacturing Example>

### 1-1 Manufacture of electrode assembly

Electrodes and separators were alternately combined with each other to manufacture an electrode assembly.

### 1-2 Manufacture of secondary battery

A pouch sheet was formed to form an accommodation part so that the electrode assembly is accommodated and then was folded after the manufactured electrode assembly is accommodated in the accommodation part to form a battery case.

Here, an anti-wrinkle bending part having a "W" shape was formed on an outer shell to prevent wrinkles from being generated on the outer shell of the battery case. Here, the anti-wrinkle bending part was formed on a first sealing part and a second sealing part on the outer shell of the battery case so that the anti-wrinkle bending part is formed on a position of each of the first sealing part and the second sealing part, which is disposed at an opposite side of a portion through which a gas is discharged.

Thereafter, an electrolyte was accommodated in the battery case that is formed by forming and folding the pouch sheet, and then, the battery case was sealed to manufacture the secondary battery.

### <Comparative Example>

A secondary battery was manufactured through the same method as the manufacturing example except for the anti-wrinkle bending part having the "W" shape is not formed on the outer wall of the battery case.

### <Experimental Example>

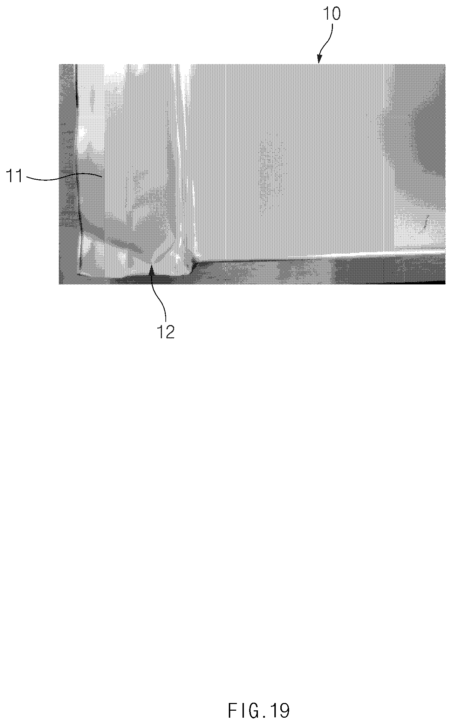

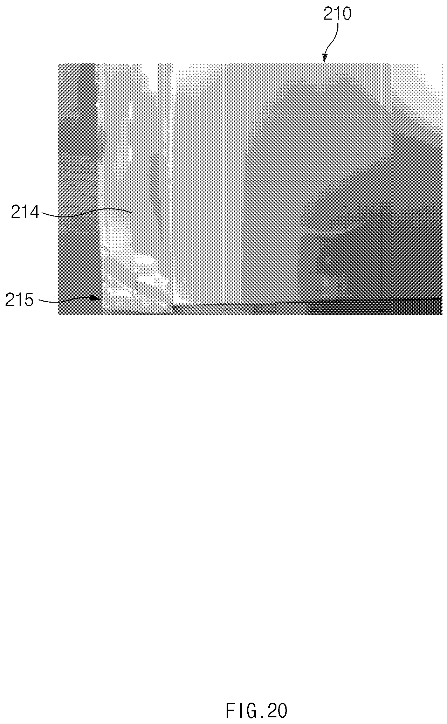

FIG. 19 is a planar image of a secondary battery manufactured according to a comparative example, and FIG. 20 is a planar image of a secondary battery manufactured according to a manufacturing example.

In the battery case of the secondary battery, it was seen that bat-ear type wrinkles are generated on the outer shell and in the vicinity of the outer shell.

Referring to FIG. 19, according to the results, in the comparative example, the bat-ear type wrinkles 12 were generated on the outer shell 11 of the battery case 10. On the other hand, referring to FIG. 20, in the manufacturing example, it was observed that no bat-ear type wrinkles are generated on the sides of the first sealing part 214 and the second sealing part, on which the anti-wrinkle bending part 215 is formed. Particularly, as the results of repetitive experiments, it was observed that the bat-ear type wrinkles of about 1.5 mm or more in comparison with the comparative example were reduced in the manufacturing examples.

As a result, it may be seen that the generation of the wrinkles in the battery case in the manufacturing example is remarkably reduced.

While the present invention has been particularly shown and described with reference to exemplary embodiments thereof, this is for the purpose of specifically describing the present invention, and thus, the secondary battery, the method for manufacturing the same, and the pressing block for manufacturing the secondary battery according to the present application are not limited thereto. It will be understood by those of ordinary skill in the art that various changes in form and details may be made therein without departing from the scope of the invention.

Furthermore, the scope of protection of the present invention will be clarified by the appended claims.

## Claims

1. A method for manufacturing a secondary battery (100), the method comprising:
a forming step of forming a pouch sheet (110) to form an accommodation part (113) in which an electrode assembly (120) is accommodated;
a folding step of folding the pouch sheet (110) with respect to a folding part (116) so that the electrode assembly (120) is accommodated in the accommodation part (113), and the accommodation part (113) is blocked from the outside to form a battery case; and
an anti-wrinkle step of forming an anti-wrinkle bending part (115) on an outer shell to prevent wrinkles from being generated on the outer shell of the folded pouch sheet (110),
wherein, in the anti-wrinkle step, the anti-wrinkle bending part (115) is bent to have a plurality of bent portions,
wherein the battery case comprises the accommodation part (113) and a gas pocket part (118) having a passage extending from the accommodation part (113),
the folding part (116) is formed at a first side (110a), the gas pocket part (118) is formed at a fourth side (110d) that is opposite to the folding part (116), a first sealing part (114) is formed at a second side (110b), and a second sealing part (117) is formed at a third side (110c) in four directions on the outer shell of the battery case, and
in the anti-wrinkle step, the anti-wrinkle bending part (115) is formed at a portion of each of the first sealing part (114) and the second sealing part (117), which is in the vicinity of the folding part (116).

2. The method of claim 1, wherein the accommodation part (113) comprises a first accommodation part (111) and a second accommodation part (112),
in the forming step, the first accommodation part (111) and the second accommodation part (112) are formed symmetrical to each other at both sides of the pouch sheet (110) with respect to the folding part (116), and
in the folding step, a bending part for the folding is formed along a virtual line on the folding part (116) so that the first accommodation part (111) and the second accommodation part (112) face each other on the pouch sheet (110), and the pouch sheet (110) is bent and folded along the bending part for the folding.

3. The method of claim 1, wherein, in the anti-wrinkle step, the outer shell is thermally compressed so that the anti-wrinkle bending part (115) is formed.

4. The method of claim 1, wherein, in the anti-wrinkle step, the anti-wrinkle bending part (115) has a cross-section having one of a rectangular pulse shape, in which rectangular concave portions and rectangular convex portions are alternately formed, an "S" shape, a "W" shape, and an "N" shape.

5. The method of claim 1, wherein, in the anti-wrinkle step, the anti-wrinkle bending part (115) is bent in a zigzag shape.

6. The method of claim 1, wherein, in the anti-wrinkle step, the anti-wrinkle bending part (115) is formed so that a bent portion is vertically formed with respect to the outer shell formed horizontally on one side surface of the battery case.

7. The method of claim 1, wherein, in the anti-wrinkle step, the anti-wrinkle bending part (115) is formed at a folding part-side on the first sealing part (114) and the second sealing part (117).

## Patentansprüche

1. Verfahren zur Herstellung einer Sekundärbatterie (100), wobei das Verfahren umfasst:
einen Bildungsschritt eines Bildens eines Beutelbogens (110), um einen Aufnahmeteil (113) zu bilden, in welchem eine Elektrodenanordnung (120) aufgenommen wird;
einen Faltschritt eines Faltens des Beutelbogens (110) in Bezug auf einen Faltteil (116), so dass die Elektrodenanordnung (120) in dem Aufnahmeteil (113) aufgenommen wird und der Aufnahmeteil (113) von dem Äußeren blockiert wird, um ein Batteriegehäuse zu bilden; und
einen Anti-Knitter-Schritt eines Bildens eines Anti-Knitter-Biegeteils (115) an einer äußeren Hülle, um zu verhindern, dass Knitter an der äußeren Hülle des gefalteten Beutelbogens (110) erzeugt werden,
wobei in dem Anti-Knitter-Schritt der Anti-Knitter-Biegeteil (115) derart gebogen wird, dass er eine Mehrzahl gebogener Abschnitte aufweist,
wobei das Batteriegehäuse den Aufnahmeteil (113) und einen Gastaschenteil (118) umfasst, welcher einen Durchgang aufweist, der sich von dem Aufnahmeteil (113) erstreckt,
in vier Richtungen an der äußeren Hülle des Batteriegehäuses der Faltteil (116) an einer ersten Seite (110a) gebildet wird, der Gastaschenteil (118) an einer vierten Seite (110d) gebildet wird, welche entgegengesetzt zu dem Faltteil (116) ist, ein erster Dichtteil (114) an einer zweiten Seite (110b) gebildet wird und ein zweiter Dichtteil (117) an einer dritten Seite (110c) gebildet wird und
in dem Anti-Knitter-Schritt der Anti-Knitter-Biegeteil (115) an einem Abschnitt jedes des ersten Dichtteils (114) und des zweiten Dichtteils (117) gebildet wird, welcher sich in der Nähe des Faltteils (116) befindet.

2. Verfahren nach Anspruch 1, wobei der Aufnahmeteil (113) einen ersten Aufnahmeteil (111) und einen zweiten Aufnahmeteil (112) umfasst,
in dem Bildungsschritt der erste Aufnahmeteil (111) und der zweite Aufnahmeteil (112) an beiden Seiten des Beutelbogens (110) in Bezug auf den Faltteil (116) symmetrisch zueinander gebildet werden und
in dem Faltschritt ein Biegeteil für das Falten entlang einer virtuellen Linie an dem Faltteil (116) gebildet wird, so dass der erste Aufnahmeteil (111) und der zweite Aufnahmeteil (112) an dem Beutelbogen (110) einander zugewandt sind, und der Beutelbogen (110) für das Falten entlang des Biegeteils gebogen und gefaltet wird.

3. Verfahren nach Anspruch 1, wobei in dem Anti-Knitter-Schritt die äußere Hülle derart thermisch komprimiert wird, dass der Anti-Knitter-Biegeteil (115) gebildet wird.

4. Verfahren nach Anspruch 1, wobei in dem Anti-Knitter-Schritt der Anti-Knitter-Biegeteil (115) einen Querschnitt aufweist, welcher eines aus einer rechteckigen Pulsform, in welcher rechteckige konkave Abschnitte und rechteckige konvexe Abschnitte abwechselnd gebildet sind, einer "S"-Form, einer "W"-Form und einer "N"-Form aufweist.

5. Verfahren nach Anspruch 1, wobei in dem Anti-Knitter-Schritt der Anti-Knitter-Biegeteil (115) in einer Zickzack-Form gebogen wird.

6. Verfahren nach Anspruch 1, wobei in dem Anti-Knitter-Schritt der Anti-Knitter-Biegeteil (115) derart gebildet wird, dass ein gebogener Abschnitt in Bezug auf die äußere Hülle vertikal gebildet wird, welche an einer Seitenfläche des Batteriegehäuses horizontal gebildet ist.

7. Verfahren nach Anspruch 1, wobei in dem Anti-Knitter-Schritt der Anti-Knitter-Biegeteil (115) an einer Faltteilseite an dem ersten Dichtteil (114) und dem zweiten Dichtteil (117) gebildet wird.

## Revendications

1. Procédé de fabrication d'une batterie secondaire (100), le procédé comprenant :
une étape de formation consistant à former une feuille de poche (110) pour former une partie de logement (113) dans laquelle est logé un ensemble électrode (120) ;
une étape de pliage consistant à plier la feuille de poche (110) par rapport à une partie de pliage (116) de sorte que l'ensemble électrode (120) soit logé dans la partie de logement (113), et que la partie de logement (113) soit bloquée de l'extérieur pour former un boîtier de batterie ; et
une étape anti-plis consistant à former une partie de courbure anti-plis (115) sur une enveloppe externe pour empêcher la formation de plis sur l'enveloppe externe de la feuille de poche (110) pliée,
dans lequel, dans l'étape anti-plis, la partie de courbure anti-plis (115) est courbée pour avoir une pluralité de parties courbées,
dans lequel le boîtier de batterie comprend la partie de logement (113) et une partie poche de gaz (118) présentant un passage s'étendant depuis la partie de logement (113), la partie de pliage (116) est formée sur un premier côté (110a), la partie poche de gaz (118) est formée sur un quatrième côté (110d) qui est opposé à la partie de pliage (116), une première partie d'étanchéité (114) est formée sur un deuxième côté (110b), et une deuxième partie d'étanchéité (117) est formée sur un troisième côté (110c) dans quatre directions sur l'enveloppe extérieure du boîtier de batterie, et dans l'étape anti-plis, la partie de courbure anti-plis (115) est formée au niveau d'une partie de chacune de la première partie d'étanchéité (114) et de la deuxième partie d'étanchéité (117), qui est à proximité de la partie de pliage (116).

2. Procédé selon la revendication 1, dans lequel la partie de logement (113) comprend une première partie de logement (111) et une deuxième partie de logement (112),
dans l'étape de formation, la première partie de logement (111) et la deuxième partie de logement (112) sont formées symétriquement l'une par rapport à l'autre des deux côtés de la feuille de poche (110) par rapport à la partie de pliage (116), et
dans l'étape de pliage, une partie de courbure pour le pliage est formée le long d'une ligne virtuelle sur la partie de pliage (116) de sorte que la première partie de logement (111) et la deuxième partie de logement (112) se fassent face sur la feuille de poche (110), et la feuille de poche (110) est courbée et pliée le long de la partie de courbure pour le pliage.

3. Procédé selon la revendication 1, dans lequel, dans l'étape anti-plis, l'enveloppe externe est comprimée thermiquement de façon à former la partie de courbure anti-plis (115).

4. Procédé selon la revendication 1, dans lequel, dans l'étape anti-plis, la partie de courbure anti-plis (115) présente une section transversale ayant l'une d'une forme d'impulsion rectangulaire, dans laquelle des parties concaves rectangulaires et des parties convexes rectangulaires sont formées en alternance, d'une forme en « S », d'une forme en « W » et d'une forme en « N ».

5. Procédé selon la revendication 1, dans lequel, dans l'étape anti-plis, la partie de courbure anti-plis (115) est courbée en forme de zigzag.

6. Procédé selon la revendication 1, dans lequel, dans l'étape anti-plis, la partie de courbure anti-plis (115) est formée de sorte qu'une partie courbée soit formée verticalement par rapport à l'enveloppe extérieure formée horizontalement sur une surface latérale du boîtier de batterie.

7. Procédé selon la revendication 1, dans lequel, dans l'étape anti-plis, la partie de courbure anti-plis (115) est formée au niveau d'un côté partie de pliage sur la première partie d'étanchéité (114) et la deuxième partie d'étanchéité (117).
